# EUROPEAN PATENT APPLICATION

(11) **EP 4 485 572 A1**
(43) Date of publication of application: **01.01.2025**
(21) Application number: 23756269.9
(22) Date of filing: 09.02.2023
(51) Int. Cl.: H01M 4/48, H01M 4/36, H01M 4/583

(54) **NEGATIVE ELECTRODE ACTIVE SUBSTANCE, MIXED NEGATIVE ELECTRODE ACTIVE SUBSTANCE MATERIAL, AND PRODUCTION METHOD FOR NEGATIVE ELECTRODE ACTIVE SUBSTANCE**

(30) Priority: 21.02.2022 JP 2022024875
(71) Applicant: SHIN-ETSU CHEMICAL CO., LTD., Tokyo 1000005 (JP)
(72) Inventor: ISHIKAWA Takuya, Annaka-shi, Gunma 379-0125 (JP); HIROSE Takakazu, Annaka-shi, Gunma 379-0125 (JP); OTOSAKA Tetsuya, Annaka-shi, Gunma 379-0125 (JP); TAKAHASHI Kohta, Annaka-shi, Gunma 379-0125 (JP)
(74) Representative: Mooser, Sebastian Thomas
(86) International application number: PCT/JP2023/004274
(87) International publication number: WO 2023/157743

(57) **Abstract**

The present invention is a negative electrode active material containing negative electrode active material particles, in which the negative electrode active material particles contain silicon oxide particles coated with a carbon layer, and the carbon layer has a peak position attributed to a G band in a range of more than 1590 cm⁻¹ and 1597 cm⁻¹ or less in a Raman spectrum obtained from Raman spectrometry for at least a part of the carbon layer. This can provide the negative electrode active material capable of improving cycle characteristics when used as the negative electrode active material of a secondary battery.

## Description

### TECHNICAL FIELD

The present invention relates to a negative electrode active material, a mixed negative electrode active material, and a method for producing a negative electrode active material.

### BACKGROUND ART

In recent years, small electronic devices, typically mobile devices, have become widespread and are being strongly required to further reduce their size and weight and increase their service life. In order to address such market needs, in particular, the development of secondary batteries that are small and lightweight and yet can provide a high energy density is being progressed. These secondary batteries are contemplated to find application not only in small electronic devices but also in large electronic devices, typically automobiles, as well as power storage systems as typified by houses.

In particular, lithium-ion secondary batteries hold great promise because it is easy to make them smaller and increase their capacity and because they also have a higher energy density than that of lead batteries or nickel-cadmium batteries.

The above lithium-ion secondary battery includes positive and negative electrodes, a separator, and an electrolyte liquid. The negative electrode contains a negative electrode active material involved in charge-and-discharge reactions.

While carbon-based active materials are widely used as the negative electrode active material, recent market needs have called for further improvement in the battery capacity. The use of silicon as a negative electrode active material has been contemplated to improve the battery capacity. This is because silicon has a theoretical capacity (4199 mAh/g) that is more than ten times greater than that of graphite (372 mAh/g) and is thus anticipated to significantly improve the battery capacity. The development of silicon materials for use as negative electrode active materials under contemplation not only includes a simple substance of silicon but also their alloys as well as their compounds as typified by oxides. A form of the active material is investigated from an applying type, which is standard in the carbon-based active material, to an integrated type in which the active material is directly deposited on a current collector.

The use of silicon as a main material of a negative electrode active material, however, expands or shrinks the negative electrode active material during charge-and-discharge, making the negative electrode active material prone to cracking particularly near its surface layer. In addition, ionic substances are generated inside the active material, which renders this negative electrode active material cracking-prone. Any cracking of the surface layer of the negative electrode active material will create a new surface, increasing the reaction area of the active material. A decomposition reaction of an electrolyte liquid occurs on this new surface, and the new surface is coated with a decomposition product of the electrolyte liquid so that the electrolyte liquid is consumed. This often leads to degradation in cycle characteristics.

Various investigations into lithium-ion secondary battery negative electrode materials and electrode configurations employing a silicon material as a main material have been made in order to improve the initial battery efficiency and cycle characteristics.

Specifically, a vapor deposition method is used to simultaneously deposit silicon and amorphous silicon dioxide in order to provide good cycle characteristics and high safety (see, e.g., Patent Document 1). Also, a carbon material (electronic conductor) is disposed on a surface of silicon oxide particles in order to provide a high battery capacity and high safety (see, e.g., Patent Document 2). Further, in order to improve cycle characteristics and provide higher input/output characteristics, an active material containing silicon and oxygen is produced and an active material layer with a higher ratio of oxygen near a current collector is formed (see, e.g., Patent Document 3). Further, in order to improve cycle characteristics, a silicon active material is formed such that it contains oxygen at an average oxygen content of 40 at% or less, with a higher oxygen content near a current collector (see, e.g., Patent Document 4).

Further, a nanocomposite containing Si-phase, SiO₂, and M_{y}O metal oxide is used to improve the initial charge-and-discharge efficiency (see, e.g., Patent Document 5). Further, SiOₓ (0.8≤x≤1.5; the range of particle size: 1 um to 50 um) and a carbon material are mixed and fired at a high temperature to improve cycle characteristics (see, e.g., Patent Document 6). Further, in order to improve cycle characteristics, an active material is controlled to have an oxygen-to-silicon molar ratio in the negative electrode active material within the range of 0.1 to 1.2 such that a difference between the maximum and minimum molar ratios near the interface between the active material and a current collector is 0.4 or less (see, e.g., Patent Document 7). Further, lithium-containing metal oxide is used to improve battery load characteristics (see, e.g., Patent Document 8). Further, a hydrophobic layer such as one made of a silane compound is formed on the surface of a silicon material to improve cycle characteristics (see, e.g., Patent Document 9). Further, silicon oxide is used and a graphite coating is formed on its surface layer to provide electric conductivity for improved cycle characteristics (see, e.g., Patent Document 10). In Patent Document 10, a Raman spectrum of the graphite coating exhibits broad peaks at shift values of 1330 cm⁻¹ and 1580 cm⁻¹, and their intensity ratio I₁₃₃₀/I₁₅₈₀ satisfies 1.5<I₁₃₃₀/I₁₅₈₀<3. Further, particles having a silicon microcrystal phase dispersed in silicon dioxide are used to provide a high battery capacity and improved cycle characteristics (see, e.g., Patent Document 11). Further, silicon oxide with a controlled silicon-to-oxygen atomic ratio of 1:y (0<y<2) is used to improve overcharge-and-overdischarge characteristics (see, e.g., Patent Document 12).

Moreover, a negative electrode material is proposed which is a negative electrode material for a non-aqueous electrolyte secondary battery containing a conductive powder coated with a conductive carbon film on surfaces of particles of a silicon-based active material with a g band observed where Raman shift is in the vicinity of 1580 to 1590 cm⁻¹ in the Raman spectrum of the conductive carbon film (see Patent Document 13).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-144101 A

### SUMMARY OF INVENTION

### TECHNICAL PROBLEM

As described above, small electronic devices, represented by mobile terminals, have been advancing recently toward high performance and multifunction, and a lithium-ion secondary battery, which is the main electric source thereof, is required to increase battery capacity. As a solution to this problem, the development of a lithium-ion secondary battery, including a negative electrode using silicon material as the main material, is desired. In addition, the lithium-ion secondary battery using silicon material is desired to have cycle characteristics almost equivalent to those of a lithium-ion secondary battery using a carbon-based active material. However, no negative electrode active material has been proposed that exhibits cycle stability equivalent to that of the lithium-ion secondary battery using the carbon-based active material.

The present invention has been made in view of the above-described problem. An object of the present invention is to provide a negative electrode active material capable of improving cycle characteristics when used as a negative electrode active material of a secondary battery, and a mixed negative electrode active material containing this negative electrode active material. Moreover, another object is to provide a method for producing an inventive negative electrode active material capable of improving cycle characteristics.

### SOLUTION TO PROBLEM

To achieve the object, the present invention provides a negative electrode active material containing negative electrode active material particles,
wherein the negative electrode active material particles contain silicon oxide particles coated with a carbon layer, and
the carbon layer has a peak position attributed to a G band in a range of more than 1590 cm⁻¹ and 1597 cm⁻¹ or less in a Raman spectrum obtained from Raman spectrometry for at least a part of the carbon layer.

In such silicon oxide particles coated with the carbon layer in which the peak position attributed to the G band obtained from Raman spectrometry is in a range of more than 1590 cm⁻¹ and 1597 cm⁻¹ or less, the number of graphene layers in the carbon layer is few, and thus edges of multi-layer graphene that generate a side reaction with an electrolyte liquid are few, thus the generation of an SEI (Solid Liquid Interface) film can be suppressed. As a result, the inventive negative electrode active material can improve the cycle characteristics when used as the negative electrode active material of a secondary battery.

In addition, the inventive negative electrode active material contains silicon oxide particles, thus capable of exhibiting a large capacity.

It is preferred that the negative electrode active material particles have a crystallite size of 1.5 nm or less, the crystallite size being obtained by Scherrer analysis of a peak attributed to a Si (111) crystal plane in an X-ray diffraction spectrum obtained by X-ray diffraction using Cu-Kα rays and following wave separation.

The negative electrode active material particles thus having a crystallite size of 1.5 nm or less on the Si (111) crystal plane obtained by the X-ray diffraction spectrum following wave separation have a composition with a smaller existence proportion of crystallized Si, and thus side reaction with the electrolyte liquid is suppressed. As a result, the cycle characteristics can be further improved when such a negative electrode active material is used as the negative electrode active material of the secondary battery.

Moreover, it is preferred that in an open circuit potential curve obtained by open circuit voltage measurement of a test battery comprising: a test electrode containing the negative electrode active material; and lithium metal as a counter electrode, an average potential of the test electrode, in which a state of charge of the test battery is in a range of 10% or more and 20% or less, is 0.4 V or more vs. (relative to) Li/Li⁺.

The negative electrode active material thus having the average potential of the test electrode being 0.4 V or more vs. Li/Li⁺, in which a state of charge (state of charge: SOC) of the test battery is in a range of 10% or more and 20% or less in the open circuit potential (open circuit potential: OCP) curve of the test electrode of the test battery produced by using the negative electrode active material, has a sufficiently small proportion of SiO component which is disproportionated to Si and SiO₂ in the silicon oxide particles, and Li is easily inserted in the negative electrode active material. Consequently, diffusibility in a SiO bulk is improved, thereby improving battery characteristics. In addition, because the existence proportion of crystallized Si in a Si component is smaller in this composition, the side reaction with the electrolyte liquid is suppressed, as a result, the cycle characteristics can be further improved when such a negative electrode active material is used as the negative electrode active material of the secondary battery.

Moreover, it is particularly preferred that in a time-of-flight secondary ion mass spectra for at least a part of the carbon layer, an intensity of a peak attributed to CₓH_{y}O_{z} (where "x" is 8 or more and 42 or less, "y" is 5 or more and 65 or less, and "Z" 1 or more and 5 or less), being a positive secondary ion, is 0.1 or more based on an intensity of a peak attributed to Si.

In the present invention, when the intensity of the peak attributed to CₓH_{y}O_{z} (where "x" is 8 or more and 42 or less, "y" is 5 or more and 65 or less, and "Z" 1 or more and 5 or less) on the surface of the carbon layer of the silicon oxide particles by TOF-SIMS analysis is in a range of 0.1 or more based on an intensity of a peak attributed to Si, the amount of the binder substantially coating the negative electrode active material particles is appropriate amount, because an occupancy rate of the binder has an appropriate proportion. Moreover, in such a negative electrode active material, contact between the edges of the multi-layer graphene and the electrolyte liquid can be mitigated, thus the side reaction with the electrolyte liquid can be suppressed. As a result, the cycle characteristics can be further improved when such a negative electrode active material is used as the negative electrode active material of the secondary battery.

In addition, it is preferred that the negative electrode active material particles have a peak position of C1s being 284.3 eV or less in an X-ray photoelectron spectrum obtained by X-ray photoelectron spectroscopy.

By virtue of the peak position of C1s being thus 284.3 eV or less in the XPS spectrum, the contact between the edges of the multi-layer graphene and the electrolyte liquid can be mitigated on the surface of the carbon layer, and thus the side reaction with the electrolyte liquid can be suppressed. As a result, the cycle characteristics can be further improved when such a negative electrode active material is used as the negative electrode active material of the secondary battery.

Moreover, it is preferred that the negative electrode active material particles have a median diameter of 4.5 um or more and 15 um or less.

When a median diameter is 4.5 um or more, an increase in an irreversible capacity of the battery due to an increase in surface area per mass can be suppressed. On the other hand, the median diameter of 15 um or less makes the particles difficult to crack, resulting in fewer new surfaces.

Furthermore, it is preferred a proportion of particles having a particle size of 1 um or less in the negative electrode active material particles is 2.5% or less on a volume basis.

When a proportion of particles having a particle size of 1 um or less in the negative active material particles is 2.5 % or less on the volume basis, the increase in the side reaction with the electrolyte liquid due to the increase in the surface area per mass can be suppressed, and thus the cycle characteristics can be further improved when used as the negative electrode active material of the secondary battery.

In addition, the present invention provides a mixed negative electrode active material comprising:
the negative electrode active material according to the present invention; and
a carbon-based active material.

In a negative electrode produced by using the inventive mixed negative electrode active material, the electric resistance of a negative electrode active material layer can be decreased, and expansion stress caused by charging can be relaxed. As a result, the inventive mixed negative electrode active material can further improve the cycle characteristics when used as the negative electrode active material of the secondary battery.

Moreover, the present invention provides a method for producing a negative electrode active material containing negative electrode active material particles containing silicon oxide particles coated with a carbon layer, the method comprising the steps of:
producing silicon oxide particles;
coating the silicon oxide particles with a carbon layer by pyrolytic chemical vapor deposition using hydrocarbon gas at a temperature of 790°C or less to produce negative electrode active material particles;
selecting, from the produced negative electrode active material particles, negative electrode active material particles containing the carbon layer in which the carbon layer, in a Raman spectrum obtained from Raman spectrometry for at least a part of the carbon layer, has a peak position attributed to a G band in a range of more than 1590 cm⁻¹ and 1597 cm⁻¹ or less; and
producing a negative electrode active material by using the selected negative electrode active material particles.

According to the inventive method for producing a negative electrode active material, the negative electrode active material, which exhibits excellent cycle characteristics when used as the negative electrode active material of the secondary battery, can be produced.

### ADVANTAGEOUS EFFECTS OF INVENTION

As described above, according to the inventive negative electrode active material, high-capacity and excellent cycle characteristics can be obtained when used as the negative electrode active material of the secondary battery.

Moreover, according to the inventive mixed negative electrode active material, more excellent cycle characteristics can be obtained when used as the negative electrode active material of the secondary battery.

Furthermore, according to the inventive method for producing a negative electrode active material, the negative electrode active material, which exhibits excellent cycle characteristics when used as the negative electrode active material of the secondary battery, can be produced.

### BRIEF DESCRIPTION OF DRAWINGS

FIG. 1 is a Raman spectrum of a carbon layer in an example of a negative electrode active material according to the present invention.
FIG. 2 is a schematic cross-sectional view of an example of a negative electrode containing a negative electrode active material according to the present invention.
FIG. 3 is an exploded view illustrating a structure example of a lithium-ion secondary battery (laminate film type) containing a negative electrode active material according to the present invention.
FIG. 4 shows Raman spectra of carbon layers of negative electrode active materials in Example 1, Comparative Example 1, and Comparative Example 4.
FIG. 5 is a part of XRD spectrum of a negative electrode active material following wave separation in Example 1.
FIG. 6 shows open circuit potential curves of test batteries produced by using negative electrode active materials in Example 1, Comparative Example 1, and Comparative Example 4.
FIG. 7 is a graph in which peak intensities of main positive secondary ions in TOF-SIMS spectra on the surface of negative electrode active materials in Example 1, Comparative Example 1, and Comparative Example 4 are compared with each other.
FIG. 8 shows a part of each of XPS spectra of negative electrode active materials in Example 1, Example 5, and Comparative Example 1.

### DESCRIPTION OF EMBODIMENTS

As described above, as a method for increasing a battery capacity of a lithium-ion secondary battery, the use of a negative electrode using silicon material as the main material has been studied for the electrode of a lithium-ion secondary battery. However, a negative electrode active material having cycle characteristics equivalent to a lithium-ion secondary battery using a carbon-based active material has not yet been proposed.

Accordingly, the present inventors have earnestly studied to obtain a negative electrode active material with high battery capacity and excellent cycle characteristics when used for a secondary battery. As a result, the present inventors found out that if the negative electrode active material includes silicon oxide particles and a carbon layer coating these and the carbon layer has a peak position attributed to a G band in a range of more than 1590 cm⁻¹ and 1597 cm⁻¹ or less in a Raman spectrum obtained from Raman spectrometry for at least a part of the carbon layer, the negative electrode active material can exhibit excellent cycle characteristics when used as the negative electrode active material of the secondary battery.

That is, the present invention is a negative electrode active material containing negative electrode active material particles,
wherein the negative electrode active material particles contain silicon oxide particles coated with a carbon layer, and
the carbon layer has a peak position attributed to a G band in a range of more than 1590 cm⁻¹ and 1597 cm⁻¹ or less in a Raman spectrum obtained from Raman spectrometry for at least a part of the carbon layer.

Meanwhile, the present invention also provides a mixed negative electrode active material comprising:
the negative electrode active material according to the present invention; and
a carbon-based active material.

Meanwhile, the present invention also provides a method for producing a negative electrode active material containing negative electrode active material particles containing silicon oxide particles coated with a carbon layer, the method comprising the steps of:
producing silicon oxide particles;
coating the silicon oxide particles with a carbon layer by pyrolytic chemical vapor deposition using hydrocarbon gas at a temperature of 790°C or less to produce negative electrode active material particles;
selecting, from the produced negative electrode active material particles, negative electrode active material particles containing the carbon layer in which the carbon layer, in a Raman spectrum obtained from Raman spectrometry for at least a part of the carbon layer, has a peak position attributed to a G band in a range of more than 1590 cm⁻¹ and 1597 cm⁻¹ or less; and
producing a negative electrode active material by using the selected negative electrode active material particles.

Hereinafter, the present invention will be described in detail. However, the present invention is not limited thereto.

### [Negative Electrode Active Material]

The inventive negative electrode active material contains negative electrode active material particles, the negative electrode active material particles contain silicon oxide particles coated with a carbon layer, and the carbon layer has a peak position attributed to a G band in a range of more than 1590 cm⁻¹ and 1597 cm⁻¹ or less in a Raman spectrum obtained from Raman spectrometry for at least a part of the carbon layer.

Such an inventive negative electrode active material contains the negative electrode active material particles (also referred to as silicon-based active material particles) containing the silicon oxide particles coated with the carbon layer, thus capable of improving battery capacity.

Furthermore, the number of graphene layers is few in the silicon oxide particles coated with the carbon layer which has the peak position attributed to the G band in the above range of the Raman spectrum obtained from Raman spectrometry. Without wishing to be bound by any theory, the reason thereof is considered as follows.

The G band, being one of the characteristic peaks of graphene, is varied according to the effect of strain and can be used as an indicator reflecting the number of graphene layers. Specifically, the G band indicates an optical vibration of carbon atoms adjacent to each other, and in normal graphite having a state of overlapping layers, the peak position of the G band appears near 1582 cm⁻¹, also due to an interphase effect. As the number of graphene layers decreases, the interphase effect disappears, approaching a single-layer graphene. Consequently, the peak position of the G band shifts to the high-frequency side (upshift of the G band).

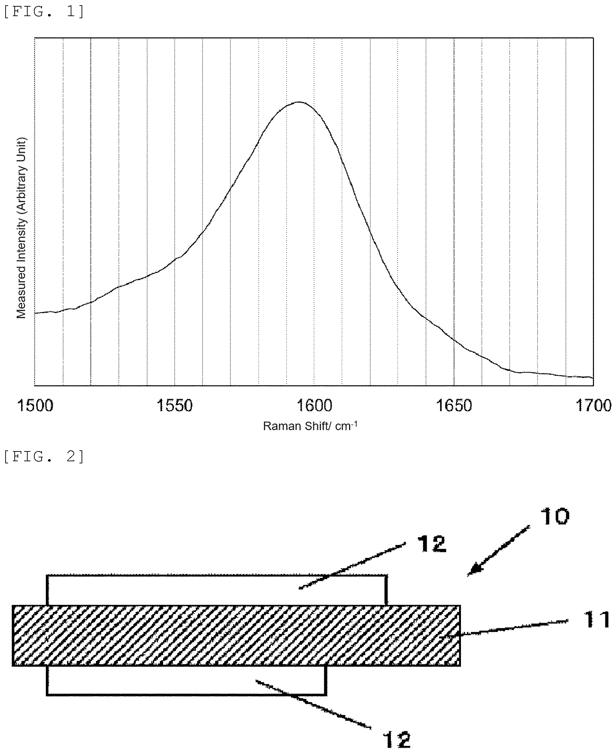

FIG. 1 shows the Raman spectrum of the carbon layer in an example of the inventive negative electrode active material. The peak position attributed to the G band in the Raman spectrum shown in FIG. 1 is 1593.5 cm⁻¹.

The inventive negative electrode active material has the peak position attributed to the G band at more than 1590 cm⁻¹ and 1597 cm⁻¹ or less in the Raman spectrum of the carbon layer; consequently, the number of graphene layers in the carbon layer is few, and thus edges of multi-layer graphene that generate a side reaction with the electrolyte liquid are few, thus a generation of an SEI film can be suppressed. Consequently, the inventive negative electrode active material can improve the cycle characteristics when used as the negative electrode of the secondary battery.

Accordingly, the inventive negative electrode active material can realize excellent cycle characteristics along with high battery capacity when used as the negative electrode of the secondary battery, in particular, a nonaqueous electrolyte battery such as the lithium-ion secondary battery.

On the other hand, when the peak position attributed to the G band is 1590 cm⁻¹ or less, the edges of the multi-layer graphene are many and the side reaction with the electrolyte liquid is generated. As a result, such a negative electrode active material has inferior cycle characteristics.

The silicon oxide particles may be, for example, a silicon oxide material containing a silicon compound having a composition represented by a general formula SiOₓ : 0.8≤x≤1.2. It is preferred that "x" is closer to 1 in the composition. This is because high cycle characteristics can be obtained. Note that the composition of the silicon oxide particles of the present invention does not necessarily mean a purity of 100%, and trace amounts of impurity elements may be contained.

It is preferred that the negative electrode active material particles have a crystallite size of 1.5 nm or less, the crystallite size being obtained by Scherrer analysis of a peak attributed to a Si (111) crystal plane in an X-ray diffraction (X-ray diffraction: XRD) spectrum obtained by X-ray diffraction using Cu-Kα rays and following wave separation.

The negative electrode active material particles thus having the crystallite size of 1.5 nm or less on the Si (111) crystal plane obtained from the XRD spectrum following wave separation has a composition with a smaller existence proportion of crystallized Si, and thus, the side reaction with the electrolyte liquid is suppressed. As a result, such a negative electrode active material can further improve the cycle characteristics when used as the negative electrode active material of the secondary battery.

The lower limit of the crystallite size on the Si (111) crystal plane obtained by the XRD spectrum following wave separation is not limited but, for example, 0.9 nm or more. The crystallite size of less than 0.9 nm cannot be analyzed by Scherrer analysis, so the size thereof is made to 0.9 nm or more; however, an amorphous structure is substantially desirable.

Moreover, it is preferred that in an open circuit potential (open circuit potential: OCP) curve obtained by open circuit voltage measurement of a test battery provided with a test electrode containing the negative electrode active material and lithium metal as a counter electrode, an average potential of the test electrode, in which a state of charge (State of Charge: SOC) of the test battery is in a range of 10% or more and 20% or less, is 0.4 V or more vs. Li/Li⁺.

In the silicon oxide particles, a potential (electric potential) of SiO is high, and a potential of a disproportionated Si is low. Therefore, the smaller the proportion of the disproportionated Si, the higher the average potential of the test electrode in the OCP curve.

The negative electrode active material having the average potential of the test electrode being 0.4 V or more vs. Li/Li⁺, in which a state of charge (SOC) of the test battery of the negative electrode active material is in a range of 10% or more and 20% or less in the OCP curve of the test electrode of the test battery produced by using the negative electrode active material, has a sufficiently small proportion of SiO component which is disproportionated to Si and SiO₂ in the silicon oxide particles. Such a negative electrode active material is easily inserted by Li. Consequently, diffusibility in a SiO bulk is improved, thereby improving battery characteristics. In addition, because the existence proportion of crystallized Si in a Si component is smaller in this composition, the side reaction with the electrolyte liquid is suppressed, as a result, the cycle characteristics can be further improved when such a negative electrode active material is used as the negative electrode active material of the secondary battery. The upper limit of the average potential of the test electrode is not particularly limited, but theoretically, 0.61 V vs. Li/Li⁺ may be the upper limit.

For example, when the degree of a mixture of crystalline Si and amorphous Si is large, the expansion behavior of silicon oxide particles is distorted between the crystalline Si and the amorphous Si due to the difference in diffusibility of Li-ion in the respective region, and thus negative electrode active material particles are more prone to crack. On the other hand, the negative electrode active material according to the preferable aspect has a small mixture of Si regions of different crystallinities as described above; thus, the negative electrode active material particles are less prone to crack caused by the expansion and less prone to degrade even after repeated charge-and-discharge. As a result, this negative electrode active material according to the preferable aspect can further suppress a side reaction between the electrolyte liquid of the battery and newly formed surfaces of the negative electrode active material particles generated by the crack and thus can further improve the cycle characteristics when used as the negative electrode active material of the secondary battery.

It is preferred that in the negative electrode active material containing the silicon oxide particles coated with the carbon layer of the present invention, in a time-of-flight secondary ion mass spectra (Time-of-Flight Secondary Ion Mass Spectra: TOF-SIMS) for at least a part of the carbon layer, an intensity of a peak attributed to CₓH_{y}O_{z} (where "x" is 8 or more and 42 or less, "y" is 5 or more and 65 or less, and "Z" 1 or more and 5 or less), being a positive secondary ion, is 0.1 or more based on an intensity of a peak attributed to Si.

It is preferred that when a plurality of peaks attributed to CₓH_{y}O_{z}, being a positive secondary ion, are observed in the TOF-SIMS spectra, the maximum peak intensity among these peaks of fragments represented by CₓH_{y}O_{z} is 0.1 or more based on the intensity of the peak attributed to Si.

In this negative electrode active material according to the preferable aspect, the amount of binder substantially coating the negative electrode active material particles is appropriate because an occupancy rate of the binder is of the proper proportion. Meanwhile, contact between the multi-layer graphene edges and the electrolyte liquid can be mitigated, thus the side reaction with the electrolyte liquid can be suppressed. As a result, when this negative electrode active material according to the preferable aspect is used as the negative electrode active material of the secondary battery, the cycle characteristics can be further improved. The upper limit of the peak intensity attributed to CₓH_{y}O_{z} in TOF-SIMS is not particularly limited but, for example, may be 4.72 based on the intensity of the peak attributed to Si.

Meanwhile, it is preferred that the negative electrode active material particles have a peak position of C1s being 284.3 eV or less in an X-ray photoelectron spectrum obtained by X-ray photoelectron spectroscopy. The peak position of C1s being 284.3 eV or less in an XPS spectrum means that the graphene edges are few. A carbon element at a graphene edge portion is oxidized by an opening to the atmosphere, etc. to be bonded with an oxygen atom and a hydroxy group, and thus an electron is attracted, thereby increasing the binding energy of C1s. On the other hand, in this negative electrode active material according to the preferable aspect, the binding energy is decreased due to the graphene edges being few, as a result, contact between the multi-layer graphene edges and the electrolyte liquid can be mitigated on the surface of the carbon layer, thus the side reaction with the electrolyte liquid can be suppressed. As a result, such a negative electrode active material can further improve cycle characteristics when used as the negative electrode active material of the secondary battery. It is more preferred that the peak position of C1s is 283.9 eV or more and 284.3 eV or less in the XPS spectrum.

In this event, it is preferred that a median diameter (D50: a particle diameter when a cumulative volume reaches 50%) of the negative electrode active material particles is 4.5 um or more and 15 um or less. When the median diameter is in the above range, lithium ions are easily occluded and released in charge-and-discharge and the particles are less prone to crack. When a median diameter is 4.5 um or more, a surface area per mass can be made smaller, thus capable of improving the cycle characteristics. On the other hand, by making the median diameter 15 um or less, the particle becomes less liable to crack, thereby being prevented from forming a new surface.

In addition, when a proportion of particles having a particle size of 1 um or less in the negative active material particles is 2.5 % or less on a volume basis, the side reaction with the electrolyte liquid is suppressed by the decrease in specific surface area, and thus the cycle characteristics can be improved. It is desired that the proportion of particles having a particle size of 1 um or less in the negative active material particles is substantially 0 %. Note that the proportion of particles having a particle size of 1 um or less in the negative active material particles can be measured by using, for example, a laser-diffraction-type particle size distribution measurement device (SALD-3100 manufactured by Shimadzu Corporation) and by setting a refractive index of 3.90 to 0.01i.

### [Mixed Negative Electrode Active Material]

The inventive mixed negative electrode active material includes the inventive negative electrode active material and a carbon-based active material.

In a negative electrode produced by using the inventive mixed negative electrode active material, an electric resistance in the negative electrode active material layer is decreased, and expansive stress accompanied by charging can be mitigated as well. As a result, the inventive mixed negative electrode active material can further improve the cycle characteristics when used as the negative electrode active material of the secondary battery.

Carbon-based active materials, such as pyrolytic carbons, cokes, glass-like carbon fibers, organic polymer compound calcined products, and carbon blacks, can be used.

Meanwhile, it is preferred that in the inventive mixed negative electrode active material, the proportion of mass of the inventive negative electrode active material (silicon-based negative electrode active material) is 6 mass% or more on the basis of the total mass of the silicon-based negative electrode active material and the carbon-based active material. When the mass of the silicon-based negative electrode active material relative to the total mass of the silicon-based negative electrode active material and the carbon-based active material has a proportion of 6 mass% or more, the battery capacity can be reliably improved.

### <Negative Electrode for Non-aqueous Electrolyte Secondary Battery>

Next, a negative electrode for a non-aqueous electrolyte secondary battery containing the inventive negative electrode active material is described. FIG. 2 is a cross-sectional view of an example of a structure of the negative electrode for the non-aqueous electrolyte secondary battery (hereinafter, also referred to as "negative electrode").

### [Structure of Negative Electrode]

As shown in FIG. 2, the negative electrode 10 has a structure having a negative electrode active material layer 12 on a negative electrode current collector 11. This negative electrode active material layer 12 may be provided on both surfaces or only on one surface of the negative electrode current collector 11. As long as the inventive negative electrode active material is used, the negative electrode current collector 11 may be absent.

### [Negative Electrode Current Collector]

The negative electrode current collector 11 is made of a material with excellent conductivity and high mechanical strength. Examples of conductive materials that can be used for the negative electrode current collector 11 include copper (Cu) and nickel (Ni). It is preferred that such conductive materials do not form an intermetallic compound with lithium (Li).

The negative electrode current collector 11 preferably contains carbon (C) or sulfur (S) in addition to its main element because these elements improve the physical strength of the negative electrode current collector. In particular, when the active material layer that expands during charging is included, the current collector containing the above element has an effect of inhibiting the deformation of the electrode, including the current collector. The content of each of the above elements is preferably, but not limited to, 100 ppm or less by mass. This is because such content ensures more efficient inhibition of the deformation. Such inhibition of the deformation can further improve the cycle characteristics.

Additionally, the surface of the negative electrode current collector 11 may or may not be roughened. Examples of the roughened negative electrode current collector include a metallic foil subjected to an electrolyzing process, embossing process, and chemical etching process. Examples of the negative electrode current collector that is not roughened include a rolled metallic foil.

### [Negative Electrode Active Material Layer]

The negative electrode active material layer 12 contains the inventive negative electrode active material which is capable of occluding and releasing lithium ions. In view of battery design, other materials may be further contained, such as a negative electrode binding agent (binder) or a conductive auxiliary agent.

Meanwhile, the negative electrode active material layer 12 may contain the mixed negative electrode active material containing the inventive negative electrode active material described above (silicon-based negative electrode active material) and the carbon-based active material, i.e., the inventive mixed negative electrode active material. Thereby, an electric resistance in the negative electrode active material layer 12 can be decreased, and expansive stress accompanied by charging can be mitigated.

Meanwhile, the negative electrode binder contained in the negative electrode active material layer 12 can be, for example, any one or more of polymer materials and synthetic rubbers. Examples of polymer materials include polyvinylidene fluoride, polyimide, polyamideimide, aramid, polyacrylic acid, lithium polyacrylate, and carboxymethyl cellulose. Examples of synthetic rubbers include styrene butadiene-based rubbers, fluorine-based rubbers, and ethylene propylene diene.

As a negative electrode conductive auxiliary agent, for example, any one or more of carbon materials, such as carbon black, acetylene black, graphite, ketjen black, carbon nanotube, and carbon nanofiber, can be used.

The negative electrode active material layer 12 is formed by, for example, an application method. The application method is a method in which the negative electrode active material particles are mixed with, e.g., the binding agents described above, or the conductive auxiliary agent, the carbon material as needed, the mixture is dispersed in an organic solvent or water, etc., and then the resultant is applied.

A specific example of a method for producing a negative electrode 10 by the application method is shown below.

Firstly, the inventive negative electrode active material is mixed with other materials such that the negative electrode binder and the conductive auxiliary agent to form a negative electrode mixture, and then an organic solvent or water is added to the mixture to make a slurry.

The above slurry is then applied to the surface of the negative electrode current collector 11 and dried to form the negative electrode active material layer 12. In this event, heat pressing and the like may be performed as needed.

In this way, the negative electrode 10 can be produced.

### [Method for Producing Negative Electrode Active Material]

The inventive negative electrode active material can be produced by, for example, an inventive method for producing a negative electrode active material described below.

The inventive method for producing a negative electrode active material containing negative electrode active material particles containing silicon oxide particles coated with a carbon layer is the method including the steps of:
producing silicon oxide particles;
coating the silicon oxide particles with a carbon layer by pyrolytic chemical vapor deposition using hydrocarbon gas at a temperature of 790°C or less to produce negative electrode active material particles;
selecting, from the produced negative electrode active material particles, negative electrode active material particles containing the carbon layer in which the carbon layer, in a Raman spectrum obtained from Raman spectrometry for at least a part of carbon layer, has a peak position attributed to a G band in a range of more than 1590 cm⁻¹ and 1597 cm⁻¹ or less; and
producing a negative electrode active material by using the selected negative electrode active material particles.

Hereinafter, each step is described in more detail.

### (Step of Producing Silicon Oxide Particles)

Firstly, the silicon oxide particles can be produced by, for example, pulverizing a deposit obtained by a vapor-deposition method into particle form. The vapor-deposition method is a method having a step of heating a raw material that generates silicon oxide gas to generate the silicon oxide gas, and a step of solidifying the generated silicon oxide gas on an adsorption plate to deposit.

A crystallite size obtained by Scherrer analysis of a peak attributed to a Si (111) crystal plane and having been subjected to a wave separation in the XRD spectrum of the silicon oxide particles can be easily controlled, for example, with: the temperature and vacuum degree of a deposition chamber in a heating furnace for the vapor deposition method; a film-formation rate of the silicon compound film onto the adsorption plate; and a vapor deposition distance which is a distance between the raw material and the adsorption plate. The temperature in the deposition chamber needs to be changed in consideration of the film-formation rate, radiant heat, the vacuum degree in the deposition chamber, the vapor deposition distance, and the like. Particularly when the deposition chamber temperature is lowered, the silicon oxide, as in the present invention, can be easily obtained by decreasing the film-formation rate, lowering radiant heat, and decreasing vacuum degree. In other words, conditions for obtaining the above XRD spectrum can be determined in advance. Note that each of the conditions, such as deposition chamber temperature, vacuum degree, film-formation rate, and vapor deposition distance necessary to obtain the silicon oxide particles in the present invention as described above, varies according to the apparatus structure of the heating furnace.

More specifically, the raw material that generates silicon oxide gas is heated in the presence of inert gas to generate silicon oxide gas. When considering the existence of oxygen on the surface of the metallic silicon powder and slight oxygen in a reaction furnace, the mixing molar ratio in the raw material is desirably in a range of 0.8 < metallic silicon powder/silicon dioxide powder < 1.3.

The generated silicon oxide gas is solidified and deposited on the adsorption plate. Subsequently, the deposit of silicon oxide is taken out under the condition of the temperature in the reaction furnace at 100°C or less, and then the deposit is pulverized and powdered using a ball mill, a jet mill, or the like. The thus obtained powder may be classified. In the present invention, the distribution of particle size of the silicon compound particles can be controlled in the pulverization step and the classification step. As described above, the silicon compound particles can be produced.

### (Step of Coating Silicon Oxide Particles with Carbon Layer to Produce Negative Electrode Active Material Particles)

Next, the carbon layer is generated on the surfaces of the silicon oxide particles. As a method for generating the carbon layer, a pyrolytic chemical vapor deposition (pyrolytic CVD method) using the hydrocarbon gas at a temperature of 790°C or less is used. Hereinafter, the method for generating the carbon layer by the pyrolytic CVD method is described.

Firstly, the silicon oxide particles are set in a furnace. Next, the hydrocarbon gas is introduced into the furnace, and the temperature in the furnace is raised. A decomposition temperature is desirably 500°C or more and 790°C or less, more preferably 500°C or more and 650°C or less. By setting the decomposition temperature to 790°C or less, an unintended disproportionation of the silicon compound particles can be suppressed. Meanwhile, by setting that to 500°C or more, a production cost can be lowered, and the carbon layer can be industrially generated on the surface of the silicon compound particles.

Although the hydrocarbon gas used as the raw material of the carbon layer is not particularly limited, it is desirably n ≤ 3 in CₙHₘ composition. When n ≤ 3, the production cost can be lowered, in addition, the physical property of a decomposition product can be made excellent as well.

As to the hydrocarbon gas used for the raw material of the carbon layer, it is more preferred to use a hydrocarbon gas having an unsaturated bond, the use of acetylene is particularly preferred.

The use of acetylene as the hydrocarbon gas being the raw material of the carbon layer allows the pyrolysis CVD, even at temperatures of 790°C or less, to perform pyrolysis reliably in a short time and enables industrial production while suppressing a generation of by-products such as tar and soot.

### (Step of Selecting Negative Electrode Active Material Particles)

Next, after performing the pyrolytic CVD method described above, from the silicon oxide particles coated with the carbon layer, negative electrode active material particles containing the carbon layer, in which the carbon layer has the peak position attributed to the G band in the range of more than 1590 cm⁻¹ and 1597 cm⁻¹ or less in the Raman spectrum obtained from Raman spectrometry for at least a part of the carbon layer, are selected. In this selecting step, the silicon oxide particles coated with the carbon layer in a state of actual use as the negative electrode active material are measured by Raman spectrometry, and then the particles in which an obtained spectrum satisfies the above condition are selected.

Note that the selection of the silicon compound particles coated with the carbon layer does not necessarily need to be performed at each time of production of the negative electrode active material. Once a production condition is found and selected thereof, in which the carbon layer having a peak position attributed to the G band in the range of more than 1590 cm⁻¹ and 1597 cm⁻¹ or less obtained from Raman spectrometry can be obtained, thereafter, the silicon oxide particles coated with the carbon layer can be produced under the same condition as the selected condition.

### (Step of Producing Negative Electrode Active Material)

Next, a negative electrode active material is produced using the negative electrode active material selected as described above. By this step, the inventive negative electrode active material can be obtained.

### <Lithium-ion Secondary Battery>

Next, the lithium-ion secondary battery containing the inventive negative electrode active material is described. Here, a laminate film type lithium-ion secondary battery is exemplified as a specific example.

### [Structure of Laminate Film Type Secondary Battery]

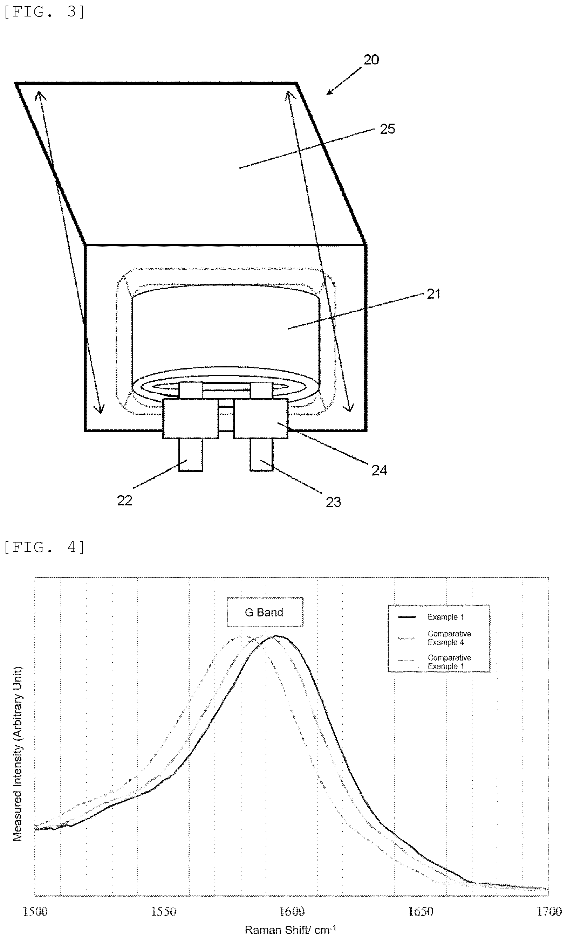

The laminate film type lithium-ion secondary battery 20 shown in FIG. 3 mainly includes a wound electrode assembly 21 stored inside sheet-shaped exterior member 25. This wound assembly is formed by winding a positive electrode, a negative electrode, and a separator sandwiched between these electrodes. There is also a case of storing a stack having the separator sandwiched between the positive electrode and the negative electrode. The electrode assemblies of both types have a positive electrode lead 22 attached to the positive electrode and a negative electrode lead 23 attached to the negative electrode. The outermost circumference of the electrode assembly 21 is protected by a protective tape.

For example, the positive electrode lead 22 and the negative electrode lead 23 are extended outward in one direction from the interior of the exterior member 25. The positive electrode lead 22 is made of, for example, a conductive material such as aluminum, and the negative electrode lead 23 is made of, for example, a conductive material such as nickel or copper.

The exterior member 25 is composed of, for example, a laminated film in which a fusion layer, a metal layer, and a surface-protective layer are laminated in this order. In this laminated film, two fusion layers of the film are bonded to each other by fusion or an adhesive at outer peripheries of the fusion layers thereof so that the fusion layer is opposite to the electrode assembly 21. The fused portion is, for example, a film of polyethylene, polypropylene, etc., and the metal portion is an aluminum foil, etc. The protective film is of, for example, nylon.

Sealing films 24 are inserted in the respective gaps between the exterior member 25 and the positive and negative electrode leads to prevent entry of outside air. The sealing film is made of, for example, polyethylene, polypropylene, or polyolefin resin.

### [Positive Electrode]

The positive electrode has a positive electrode active material layer provided on both surfaces or one surface of a positive electrode current collector, as in the negative electrode 10 shown in FIG. 2, for example.

The positive electrode current collector is formed by, for example, a conductive material such as aluminum.

The positive electrode active material layer contains any one or two or more of positive electrode materials capable of occluding and releasing lithium ions and may contain other materials such as the binder, the conductive auxiliary agent, and the dispersing agent, according to design. In this case, details for the binder and the conductive auxiliary agent are the same as in, for example, the negative electrode binder and the negative electrode conductive auxiliary agent, which are already described.

The positive electrode material is preferably a lithium-containing compound. Examples of this lithium-containing compound include a composite oxide composed of lithium and a transition metal element or a phosphate compound containing lithium and a transition metal element. Among these positive electrode materials, a compound containing at least any one of nickel, iron, manganese, and cobalt is preferable. The chemical formula of this compound is expressed by, for example, LiₓM1O₂ or Li_{y}M2PO₄, where M1 and M2 represent at least any one of the transition metal elements. In this formula, "x" and "y" represent a value varied depending on the state of charge-and-discharge of a battery, which typically satisfies 0.05 ≤ x ≤ 1.10 and 0.05 ≤ y ≤ 1.10.

Examples of a composite oxide containing lithium and a transition metal element include a lithium cobalt composite oxide (LiₓCoO₂) and a lithium nickel composite oxide (LiₓNiO₂). Examples of a phosphate compound containing lithium and a transition metal element include a lithium iron phosphate compound (LiFePO₄) and a lithium iron manganese phosphate compound (LiFe₁₋ᵤMnᵤPO₄ (0 < u < 1)). When these positive electrode materials are used, high battery capacity and excellent cycle characteristics can be obtained.

### [Negative Electrode]

A negative electrode has the same structure as the negative electrode 10 for the lithium-ion secondary battery in FIG. 1 described above. For example, negative electrode active material layers 12 are provided on both faces of the current collector 11. The negative electrode preferably has a negative electrode charge capacity larger relative to the electrical capacitance (charge capacity as a battery) provided by the positive electrode active material agent. This because the precipitation of lithium metal on the negative electrode can be suppressed.

The positive electrode active material layers are provided partially on both faces of the positive electrode current collector, and the negative electrode active material layers are also provided partially on both faces of the negative electrode current collector. In this case, for example, the negative electrode active material layers provided on the negative electrode current collector are provided with a region where the opposite positive electrode active material layers are not present. This is to design a stable battery.

The non-facing region, i.e., a region at which the positive electrode active material layer and negative electrode active material layer do not face one another as described above, is hardly affected by charge-and-discharge. The state of the negative electrode active material layers is consequently retained from just after the formation. This enables investigation of a composition such as a composition of the negative electrode active material with excellent reproducibility and high precision without dependence on the presence or absence of charge-and-discharge.

### [Separator]

The separator separates the positive electrode from the negative electrode so as to prevent short circuits due to contact of both electrodes while passing lithium ions through. This separator may be made of, for example, a porous film of synthetic resin or ceramics and may have a laminated structure, in which two or more porous films are laminated. Examples of synthetic resin include polytetrafluoroethylene, polypropylene, and polyethylene.

### [Electrolyte Liquid]

At least a part of the positive electrode active material layer, at least a part of the negative electrode active material layer, and/or the separator are impregnated with an electrolyte in liquid form (electrolyte liquid). This electrolyte liquid contains electrolyte salt dissolved in a solvent and may contain other materials, such as additives.

The solvent can be, for example, a non-aqueous solvent. Examples of non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, at least any one or more of ethylene carbonate, propylene carbonate, dimethyl carbonate, diethyl carbonate, or ethylmethyl carbonate is preferably used. This is because such solvent enables better characteristics. In this case, more advantageous characteristics can be obtained by combining high-viscosity solvents such as ethylene carbonate or propylene carbonate with low-viscosity solvents such as dimethyl carbonate, ethylmethyl carbonate, or diethyl carbonate. This is because the dissociation and ion mobility of electrolyte salts are improved.

When an alloy-based negative electrode is used, it is desirable that, in particular, the solvent contains at least any one of the halogenated chain carbonate ester or halogenated cyclic carbonate ester. Thereby, a stable coating is formed on the surface of the negative electrode active material at charge-and-discharge, particularly charging. In this case, the halogenated chain carbonate ester is chain carbonate ester having halogen as a constituent element (at least one hydrogen is substituted by halogen). In addition, the halogenated cyclic carbonate ester is cyclic carbonate ester having halogen as a constituent element (that is, at least one hydrogen is substituted by halogen).

The halogen type is preferably, but not limited to, fluorine, for fluorine enables the formation of a better coating than other halogens. A larger number of halogens is better, for the coating obtained is more stable. This is because a decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains cyclic carbonate ester having unsaturated carbon bond. This is because a stable coating can be formed on the surface of the negative electrode at charge-and-discharge, and the decomposition reaction of the electrolyte liquid can be suppressed. Examples of the unsaturated carbon bond cyclic carbonate ester include vinylene carbonate and vinyl ethylene carbonate.

In addition, the solvent additive preferably contains sultone (cyclic sulfonic acid ester). This is because a battery's chemical stability can be improved. Examples of sultone include propane sultone and propene sultone.

In addition, the solvent preferably includes acid anhydride, for this enables improvement of an electrolyte's chemical stability. Examples of acid anhydride include propane disulfonic acid anhydride.

The electrolyte salt can contain, for example, at least any one or more of light metal salts, such as lithium salt. Examples of lithium salt include lithium hexafluorophosphate (LiPF₆) and lithium tetrafluoroborate (LiBF₄).

The content of the electrolyte salt relative to the solvent is preferably 0.5 mol/kg or more and 2.5 mol/kg or less. This is because high ionic conductivity can be obtained.

### [Method of Producing Laminate Film Type Secondary Battery]

In the present invention, the negative electrode can be produced by using the negative electrode active material produced by the above-described inventive method for producing the negative electrode active material, and the lithium-ion secondary battery can be produced by using the produced negative electrode.

Hereinafter, an example of a method for producing a laminate film type secondary battery with reference to FIG. 3.

Firstly, the positive electrode is produced with the above-described positive electrode material. The positive electrode active material is mixed with, as necessary, the binder, the conductive auxiliary agent, or the like to a positive electrode mixture. Then, the mixture is dispersed in an organic solvent to form a positive electrode mixture slurry. The mixture slurry is then applied to the positive electrode current collector with a coating apparatus, such as a die coater having a knife roll or a die head, and dried by hot air to obtain the positive electrode active material layer. The positive electrode active material layer is finally subjected to compression molding with, for example, a roll press. In this case, heating may be performed, and the heating and compression may be repeated multiple times.

Secondly, by using the same procedure as in the above-described method for producing the negative electrode, the negative electrode active material layer is formed on the negative electrode current collector to produce the negative electrode.

In producing the positive electrode and the negative electrode, the active material layers are formed on both faces of each of the positive and the negative electrode current collectors, respectively. For each electrode, the active materials applied to both sides of the current collector may have different lengths (see FIG. 2).

Then, the electrolyte liquid is prepared. Then, with ultrasonic welding and so on, the positive electrode lead 22 is attached to the positive electrode current collector, and the negative electrode lead 23 is attached to the negative electrode current collector (see FIG. 3). Then, the positive electrode and negative electrode are stacked with the separator interposed therebetween or wound to produce the wound electrode assembly 21, and the protecting tape is stuck to the outermost circumference of the assembly 21. Then, the wound assembly is molded to form a flat shape. The wound electrode assembly is then sandwiched between the folded film-shaped exterior member 25, and insulating portions of the exterior member are bonded to one another by heat sealing; thereby, the wound electrode assembly is encapsulated with one direction being released. The sealing films are inserted between the exterior member, and each of the positive electrode lead and the negative electrode lead. The prepared electrolyte liquid described above is introduced from the released side in a prescribed amount to perform the impregnation of the electrolyte liquid under a vacuum. After the impregnation, bonding is performed at the released side by vacuum heat sealing.

In this manner, the laminate film type secondary battery 20 can be produced.

### EXAMPLES

Hereinafter, the present invention will be specifically described with reference to Examples and Comparative Examples. However, the present invention is not limited thereto.

### (Example 1)

A laminate film type lithium-ion secondary battery 20 shown in FIG. 3 was produced by the following procedure.

### [Producing Positive Electrode]

Firstly, a positive electrode was produced by the following procedure. 95 mass% of LiNi_{0.7}Co_{0.25}Al_{0.05}O (lithium nickel cobalt aluminum composite oxide: NCA), being a lithium nickel cobalt composite oxide, as a positive electrode active material, 2.5 mass% of a positive electrode conductive auxiliary agent, and 2.5 mass% of a positive electrode binder (polyvinylidene fluoride: PVDF) were mixed to prepare positive electrode mixture. Then, the positive electrode mixture was dispersed in an organic solvent (N-methyl-2-pyrrolidone: NMP) to produce a paste slurry. The slurry was subsequently applied to both surfaces of a positive electrode current collector with a coating apparatus having a die head and dried with a drying apparatus of hot-air type. At this time, the positive electrode current collector having a thickness of 15 um was used. The resultant was finally compression-molded with a roll press. As a result, the positive electrode was obtained.

### [Producing Negative Electrode]

Next, a negative electrode was produced by the following procedure.

### [Producing Negative Electrode Active Material]

Firstly, a negative electrode active material was produced by the following procedure. A mixed raw material of metallic silicon and silicon dioxide was introduced in a reaction furnace and evaporated in an atmosphere with a vacuum degree of 10 Pa to deposit the evaporated material on an adsorption plate. The deposit was sufficiently cooled, then taken out, and pulverized with a ball mill. The value "x" in SiOₓ of the silicon oxide particles thus obtained was 1.0. Subsequently, the particle size of the silicon oxide particles was adjusted by classification.

Subsequently, the silicon oxide particles were introduced in a pyrolysis chemical vapor deposition furnace. Then, acetylene gas, being a hydrocarbon gas, was introduced into the furnace, then the temperature in the furnace was raised. A pyrolysis chemical vapor deposition (pyrolysis CVD) was performed at 630°C for 14 hours in Example 1, thereby coating the surface of the silicon oxide particles with carbon material (carbon layer). Consequently, negative electrode active material particles were obtained.

Here, a Raman spectrum of the carbon layer coating the silicon oxide particles in the negative electrode active material particles after the pyrolysis CVD was measured by a Raman spectrum method. A measured value of the Raman spectrum of the carbon layer can be measured by using, for example, a Raman microscope XploRa manufactured by HORIBA, Ltd. Also, values such as a peak intensity Ig of a G band in the measured Raman spectrum can be calculated by using an analysis software LabSpec, etc. A measurement condition in Example 1 was as follows.
· Apparatus name: HORIBA XploRA Plus
· Olympus BX41 microscope
· Laser (532nm)

Here, the measured Raman spectrum is shown with a dark solid line in FIG. 4. A peak position attributed to the G band of a Raman spectroscopic spectrum of the carbon layer coating the silicon oxide particles in Example 1 shown in FIG. 4 was 1593.5 cm⁻¹. By having the above peak position in such a range of more than 1590 cm⁻¹ and 1597 cm⁻¹ or less, the number of graphene layers in the carbon layer is few, and then edges of multi-layer graphene that generate a side reaction with an electrolyte liquid are few; thus, a generation of a SEI film can be suppressed. The fact will be demonstrated by the results presented in the latter part.

Based on the measurement results by the Raman spectrum method as described above, the negative electrode active material particles which were produced in the above-described procedures were selected as the negative electrode active material particles containing the carbon layer, in which the peak position attributed to the G band was in a range of more than 1590 cm⁻¹ and 1597 cm⁻¹ or less in the Raman spectrum of the carbon layer, to make the negative electrode active material in Example 1.

### [Analysis of Negative Electrode Active Material]

### [X-ray diffraction]

Meanwhile, a peak intensity attributed to Si (111) crystal plane in an X-ray diffraction spectrum of the silicon oxide particles can be calculated by an XRD peak analysis. In Example 1, a measurement was performed under the below condition.

X-ray diffraction apparatus (XRD)

| | |
|---|---|
| · Apparatus | : D2 PHASER manufactured by Bruker Corporation |
| · X-ray source | : Cu |
| · Voltage | : 30 kV |
| · Electric current | : 10 mA |
| · Step width | : 0.05° |
| · Retention time | : 1 second |
| · Divergence slit | : 0.5° |
| · Incident side seller | : 4° |
| · Receiving side soller | : 4° |
| Calculation of peak intensity | |
| · Software | : DIFFRAC.EVA |

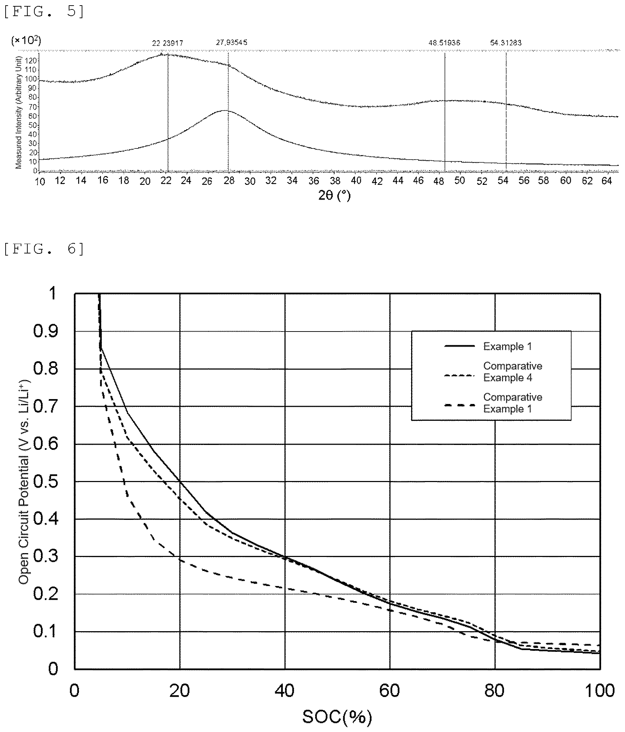

Meanwhile, a crystallite size obtained by Scherrer analysis of a peak attributed to the Si (111) crystal plane having been subjected to wave separation in the X-ray diffraction spectrum can be calculated by an XRD peak analysis. An XRD spectrum before wave separation is shown in an upper side of FIG. 5, and an XRD spectrum after wave separation is shown in a lower side of FIG. 5. In addition, a condition for the calculation of the crystallite size attributed to the Si (111) crystal plane by Scherrer equation was set as follows.

Calculation of crystallite size

| | |
|---|---|
| · Analysis software | : DIFFRAC.TOPAS |
| · Analysis method | : Peak-fitting method |
| · Emission Profile | : Cu Ka 5.1 am |
| · Function | : FP (First Principle) function |
| · Refinement Option | : Select "Caluculate Error", "Use |

### Extrapolation"

The crystallite size obtained from the peak attributed to the Si (111) crystal plane of the negative electrode active material in Example 1 was 1.14 nm.

### [Measurement of Open Circuit Potential Curve]

Meanwhile, a coin battery, being a test battery, was produced using the negative electrode active material in Example 1 to perform an open circuit voltage (open circuit voltage: OCV) measurement. An open circuit potential (OCP) curve calculated from this measurement is shown with a solid line in FIG. 6. An average potential of a test electrode, in which the state of charge of the test battery was in a range of 10% or more and 20% or less, was calculated from this curve.

The production of the coin battery, being the test battery, was performed as follows.

First, Li foil having a thickness of 1 mm was punched into a disc shape having a diameter of 16 mm and pasted onto an aluminum clad to produce a counter electrode.

Meanwhile, the negative electrode was produced using the negative electrode active material in Example 1 by the same production procedure of the negative electrode in Example 1 described below in detail.

The negative electrode obtained was punched into a disk shape having a diameter of 15 mm to produce a test electrode. This test electrode was faced with the Li foil pasted onto the aluminum clad via a separator interposed therebetween, and the electrolyte liquid was injected, and then a 2032 coin battery was produced.

The open circuit voltage measurement and the calculation of the open circuit potential curve were performed under the below conditions.

Firstly, the coin battery produced was charged in 5% SOC increments with the capacity at full charge set at 100, and the open circuit voltage was measured. An open circuit time was 5 hours at a current density of 0.2 mA/cm² CC/CV, and the voltage after 5 hours was plotted.

The SOC of 100% substantially resulted in a current value below 0.2 mA/cm² but the charging was terminated at the actually measured current value of 0.1 mA.

### [Time-of-Flight Secondary Ion Mass Spectrometry]

In addition, a time of flight secondary ion mass analysis was performed on the carbon layer of the negative electrode active material in Example 1, and TOF-SIMS spectra were obtained. A condition for measurement was as follows. The measurements were performed twice.

TOF-SIMS (time-of-flight secondary ion mass spectrometry)
· Apparatus : TOF.SIMS 5 (manufactured by ION-TOF),
· Secondary ion polarity: positive,
· Mass range (m/z): 0 to 1500,
· Raster size: 300 um square,
· Number of scans: 16 scans,
· Number of pixels (one side): 256 pixels,
· Measurement vacuum degree (before sample introduction): 4×10⁻⁷ Pa or less,
· Primary ion type: Bi3⁺⁺,
· Primary ion acceleration voltage: 30 kV,
· Pulse width: 12.5 ns,
· Bunching: present (high-mass resolution measurement),
· Charge neutralization: none,
· Post-stage acceleration: 9.5 kV.

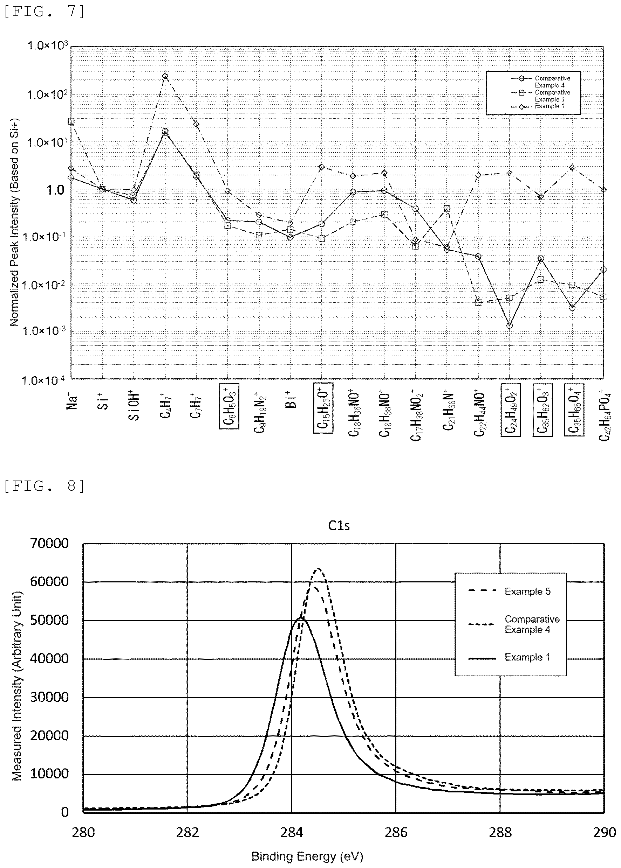

The peak intensities (count values, normalized values, and average values of the normalized value) of the main positive secondary ions in the measured TOF-SIMS spectra are shown in Table 1 below. Table 1 shows the normalized values of up to three significant digits. In addition, the peak intensities (normalized values) of the positive secondary ions in the measured TOF-SIMS spectra are shown in FIG. 7. Note that fragments represented by CₓH_{y}O_{z} (where "x" is 8 or more and 42 or less, "y" is 5 or more and 65 or less, and "z" is 1 or more and 5 or less) are enclosed in squares in FIG. 7.

**[Table 1]**

| *m*/*z* | | Formula | Intensity (count) | | Normalized Value | | | |
|---|---|---|---|---|---|---|---|---|
| | | | First Time | Second Time | First Time | Second Time | | Average Value |
| 22.99 | | Na⁺ | 2597 | 4202 | 2.18 | 3.30 | | **2.74** |
| 27.97 | | Si⁺ | 1193 | 1272 | 1.00 | 1.00 | | **1.00** |
| 44.98 | | SiOH⁺ | 1189 | 1200 | 9.97×10⁻¹ | 9.43×10⁻¹ | | **9.70×10⁻¹** |
| 55.06 | | C₄H₇⁺ | 295579 | 298719 | 2.48×10² | 2.35×10² | | **2.41×10²** |
| 91.05 | | C₇H₇⁺ | 28780 | 28374 | 2.41×10¹ | 2.23×10¹ | | **2.32×10¹** |
| 149.03 | | C₈H₅O₃⁺ | 1072 | 1176 | 8.99×10⁻¹ | 9.25×10⁻¹ | | **9.12×10⁻¹** |
| 155.15 | | C₉H₁₉N₂⁺ | 331 | 369 | 2.78×10⁻¹ | 2.90×10⁻¹ | | **2.84×10⁻¹** |
| 208.98 | | Bi⁺ | 182 | 298 | 1.53×10⁻¹ | 2.34×10⁻¹ | | **1.94×10⁻¹** |
| 219.18 | | C₁₅H₂₃O⁺ | 3572 | 3597 | 2.99 | 2.83 | | **2.91** |
| 282.30 | | C₁₈H₃₆NO⁺ | 2800 | 1768 | 2.35 | 1.39 | | **1.87** |
| 284.31 | | C₁₈H₃₈NO⁺ | 3240 | 2113 | 2.72 | 1.66 | | **2.19** |
| 288.30 | | C₁₇H₃₈NO₂⁺ | 120 | 91 | 1.01×10⁻¹ | 7.16×10⁻² | | **8.61×10⁻²** |
| 304.27 | | C₂₁H₃₈N⁺ | 67 | 81 | 5.62×10⁻² | 6.37×10⁻² | | **5.99×10⁻²** |
| 338.35 | | C₂₂H₄₄NO⁺ | 1535 | 3327 | 1.29 | 2.62 | | **1.95** |
| 369.32 | | C₂₄H₄₉O₂⁺ | 1750 | 3683 | 1.47 | 2.90 | | **2.18** |
| 530.49 | | C₃₅H₆₂O₃⁺ | 597 | 1141 | 5.01×10⁻¹ | 8.97×10⁻¹ | | **6.99×10⁻¹** |
| 549.53 | | C₃₅H₆₅O₄⁺ | 2650 | 4398 | 2.22 | 3.46 | | **2.84** |
| 663.54 | | C₄₂H₆₄PO₄⁺ | 1065 | 1317 | 8.93×10⁻¹ | 1.04 | | **9.64×10⁻¹** |
| | | Total Secondary Ion Intensity | 3694106 | 3838329 | | | | |

As shown in Table 1 and FIG. 7, in the TOF-SIMS spectra of the carbon layers of the negative electrode active materials in Example 1, intensities of a peak attributed to C₄H₇, being the positive secondary ion, and a peak attributed to C₇H₇, being the positive secondary ion, were 241.4 for C₄H₇ and 23.2 for C₇H₇ based on an intensity of a peak attributed to Si.

Besides, as for intensities of peaks attributed to CₓH_{y}O_{z} (where "x" is 8 or more and 42 or less, "y" is 5 or more and 65 or less, and "Z" is 1 or more and 5 or less), being positive secondary ions, in the time-of-flight secondary ion mass spectra; that of C₈H₅O₃ was 0.91, that of C₁₅H₂₃O was 2.91, that of C₂₄H₄₉O₂ was 2.18, that of C₃₅H₆₂O₃ was 0.70, and that of C₃₅H₆₅O₄ was 2.84 based on the intensity of the peak attributed to Si.

### [Analysis by X-ray Photoelectron Spectroscopy]

Moreover, binding energy of the carbon layer of the negative electrode active material in Example 1 described above was quantified by XPS (X-ray photoelectron spectroscopy). The measurement by XPS was performed under a condition below.

XPS
- Apparatus: X-ray photoelectron spectrometer,
- X-ray source: Monochromatic Al Kα-ray,
- X-ray spot diameter: 100 um,
- Ar-ion Gun Sputtering Condition: 0.5 kV 2 mm×2 mm.

The XPS spectrum of the negative electrode active material in Example 1 in a range of 280 eV or more and 290 eV or less is shown in FIG. 8.

As shown in FIG. 8, the XPS spectrum of the negative electrode active material in Example 1 had a peak of C1s at a position of the binding energy of 284.1 eV.

Based on the above, it was found that the negative electrode active material particles of the negative electrode active material in Example 1 were coated with the carbon layer.

### [Producing Negative Electrode]

Then, the produced negative electrode active material in Example 1, a conductive auxiliary 1 (carbon nanotube, CNT), a conductive auxiliary 2 (carbon fine particles having a median diameter of approximately 50 nm), styrene-butadiene rubber (styrene-butadiene copolymer, hereinafter, referred to as SBR), and carboxymethylcellulose (hereinafter, referred to as CMC) were mixed at a dry mass ratio of 92.5 : 1 : 1 : 2.5 : 3. Then, the mixture was diluted with pure water to form a negative electrode mixture slurry. Note that the SBR and the CMC are the negative electrode binders (negative electrode binding agents).

In addition, as a negative electrode current collector, an electrolytic copper foil having a thickness of 15 um was used. This electrolytic copper foil contained carbon and sulfur at each concentration of 70 mass ppm.

Finally, the negative electrode mixture slurry was applied onto the negative electrode current collector, and dried in a vacuum atmosphere at 100°C for one hour. After drying, an amount of the deposited negative electrode active material layer per unit area (also referred to as an area density) on one surface of the negative electrode was 5 mg/cm².

The negative electrode in Example 1 was produced by the above procedure.

### [Producing Lithium-ion Secondary Battery]

Next, 4-fluoro-1,3-dioxolane-2-one (FEC), ethylene carbonate (EC), and dimethyl carbonate (DMC)) were mixed to prepare a solvent. An electrolyte salt (lithium hexafluorophosphate: LiPF₆) was dissolved into this solvent to prepare an electrolyte liquid. In this case, the composition of the solvent was FEC : EC : DMC = 10 : 20 : 70 in a deposition ratio, and a content of the electrolyte salt was 1.2 mol/kg relative to the solvent.

Next, the secondary battery was assembled by the following procedure. First, an aluminum lead was ultrasonically welded to one end of the positive electrode current collector, and a nickel lead was welded to one end of the negative electrode current collector. Then, the positive electrode, a separator, the negative electrode, and a separator were stacked in this order, which were wound in the longitudinal direction to form a wound electrode assembly. A winding end of the assembly was fixed with a PET protective tape. As the separator, a laminated film (thickness: 12 um) having a film mainly formed with a porous polyethylene sandwiched between films mainly formed with a porous polyethylene was used. After enclosing the electrode assembly into the exterior members, outer edges except on one side were subjected to thermal fusion bonding to store the electrode assembly therein. As the exterior member, an aluminum laminate film formed by laminating the nylon film, an aluminum foil, and a polypropylene film was used. Subsequently, the prepared electrolyte liquid was poured from an opening for impregnation under the vacuum atmosphere and then thermal fusion bonding was performed for sealing. Thereby, a lithium-ion secondary battery in Example 1 was obtained.

### [Evaluation of Cycle Characteristics]

Next, the cycle characteristics of the lithium-ion secondary battery in Example 1 produced in the above manner were evaluated.

The cycle characteristics were investigated in the following manner. First, two cycles of charge-and-discharge were performed at 0.2 C under an atmosphere of 25°C to stabilize the battery, and the discharge capacity in the second cycle was measured. Next, charge-and-discharge were repeated until the total number of cycles reached 499 cycles and the discharge capacity was measured every cycle. Finally, a capacity retention ratio (hereinafter, also referred to as a cycle retention ratio) was calculated by dividing the discharge capacity in the 500th cycle, which was obtained by charge-and-discharge at 0.2 C, by the discharge capacity in the second cycle. In the normal cycle, that is, in the cycles from the third cycle to the 499th cycle, the charge-and-discharge were performed at 0.7 C in charging and at 0.5 C in discharging.

### (Examples 2 to 5)

In Examples 2 to 5, negative electrode active materials were produced in the same way as in Example 1, except that G band peak positions in Raman spectra were adjusted as shown in Table 2 by adjusting CVD temperature and time as shown in Table 2 below, and lithium-ion secondary batteries in Examples 2 to 5 were produced by using the produced negative electrode active materials. Note that a thermal CVD was difficult at a temperature in Example 4; thus, a CVD temperature was adjusted by a plasma CVD.

### (Examples 6 to 8)

In Examples 6 to 8, negative electrode active materials were produced in the same way as in Example 1, except that median diameters of silicon oxide particles and/or proportions of particles with a particle size of 1 pm or less in the negative electrode active material particles were adjusted as shown in Table 2, and lithium-ion secondary batteries in Examples 2 to 5 were produced by using the produced negative electrode active materials.

### (Comparative Examples 1 and 2)

In Comparative Examples 1 and 2, negative electrode active materials were produced in the same way as in Example 1, except that G band peak positions in Raman spectra were adjusted as shown in Table 2 by adjusting CVD temperature and time, and hydrocarbon gas as shown in Table 2, and lithium-ion secondary batteries in Comparative Examples 1 and 2 were produced by using the produced negative electrode active materials.

### (Comparative Example 3)

In Comparative Example 3, a negative electrode active material was produced in the same way as in Example 1, except that CVD temperature, time, hydrocarbon gas, and a proportion of particles with a particle size of 1 pm or less in the negative electrode active material particles were adjusted as shown in Table 2, and a lithium-ion secondary battery in Comparative Example 3 was produced by using the produced negative electrode active material.

### (Comparative Example 4)

In Comparative Example 4, a negative electrode active material was produced in the same way as in Example 1, except that a peak position of a G band in a Raman spectrum as shown in Table 2 was adjusted by adjusting CVD temperature and hydrocarbon gas as shown in Table 2, and a lithium-ion secondary battery in Comparative Example 4 was produced by using the produced negative electrode active material.

### (Comparative Example 5)

In Comparative Example 4, a negative electrode active material was produced in the same way as in Comparative Example 4, except that a peak position of a G band in a Raman spectrum was adjusted as shown in Table 2 by adjusting CVD temperature and CVD time as shown in Table 2, and a lithium-ion secondary battery in Comparative Example 5 was produced by using the produced negative electrode active material.

The negative electrode active materials in Examples 2 to 8, and Comparative Examples 1 to 5 were analyzed in the same way as in Example 1. In addition, the cycle characteristics of the lithium-ion secondary batteries in these examples were evaluated in the same procedure as in Example 1. These results are shown in Tables 2 and 3 below.

**[Table 2]**

| | CVD Temperature [°C] | CVD Time [time] | Hydrocarbon Gas | Peak Position attributed to G band in Raman Spectrum [cm⁻¹] | Median Diameter [µm] | Proportion of Particles with Particle Size of 1 µm or less [%] |
|---|---|---|---|---|---|---|
| Example 1 | 630 | 14 | Acetylene | 1593.5 | 6.6 | 0 |
| Example 2 | 550 | 48 | Acetylene | 1596.2 | 6.6 | 0 |
| Example 3 | 690 | 5 | Acetylene | 1592.4 | 6.6 | 0 |
| Example 4 | 500 | 24 | Acetylene (Plasma) | 1596.9 | 6.6 | 0 |
| Example 5 | 790 | 3 | Acetylene | 1590.1 | 6.6 | 0 |
| Example 6 | 630 | 14 | Acetylene | 1593.2 | 4.3 | 0 |
| Example 7 | 630 | 14 | Acetylene | 1593.6 | 16 | 0 |
| Example 8 | 630 | 14 | Acetylene | 1593.4 | 6.4 | 3 |
| Comparative Example 1 | 1000 | 8 | Natural Gas (Methane) | 1582.0 | 6.6 | 0 |
| Comparative Example 2 | 1000 | 8 | Natural Gas (Methane) | 1582.0 | 8.8 | 0 |
| Comparative Example 3 | 1000 | 8 | Natural Gas (Methane) | 1582.0 | 5.8 | 17 |
| Comparative Example 4 | 850 | 14 | Propane | 1588.6 | 6.6 | 0 |
| Comparative Example 5 | 860 | 13 | Propane | 1588.3 | 6.6 | 0 |

**[Table 3]**

| | Capacity Retention Ratio up to 500^{th} cycle [%] | XRD | OCP | Relative Intensity of CₓH_{y}O_{z} (x=8-42) Peak in TOF-SIMS Spectrum (Relative to Peak Intensity of Si) | | | | | XPS |
|---|---|---|---|---|---|---|---|---|---|
| | | Si(111) Crystallite Size [nm] | Average Potential of Test Electrode at SOC 10-20% in OCR Curve [V vs. Li/Li⁺] | C₈H₅O₃ | C₁₅H₂₃O | C₂₄H₄₉O₂ | C₃₅H₆₂O₃ | C₃₅H₆₅O₄ | Peak Position of C1s [eV] |
| Example 1 | 86 | 1.14 | 0.59 | 0.91 | 2.912 | 2.181 | 0.699 | 2.840 | 284.13 |
| Example 2 | 87 | 0.94 | 0.61 | 1.12 | 3.100 | 4.500 | 0.890 | 3.600 | 284.01 |
| Example 3 | 83 | 1.21 | 0.58 | 0.89 | 2.420 | 1.450 | 0.580 | 2.120 | 284.24 |
| Example 4 | 72 | 0.91 | 0.49 | 1.27 | 3.230 | 4.720 | 0.930 | 3.950 | 283.97 |
| Example 5 | 71 | 1.31 | 0.55 | 0.85 | 2.120 | 0.975 | 0.490 | 1.654 | 284.29 |
| Example 6 | 71 | 1.13 | 0.58 | 0.87 | 3.070 | 2.260 | 0.630 | 2.720 | 284.12 |
| Example 7 | 72 | 1.14 | 0.57 | 0.88 | 2.630 | 2.080 | 0.540 | 1.890 | 284.14 |
| Example 8 | 70 | 1.16 | 0.55 | 0.87 | 3.010 | 2.360 | 0.550 | 2.600 | 284.11 |
| Comparative Example 1 | 64 | 3.51 | 0.37 | 0.17 | 0.091 | 0.005 | 0.012 | 0.010 | 284.50 |
| Comparative Example 2 | 66 | 3.52 | 0.36 | 0.16 | 0.090 | 0.005 | 0.018 | 0.008 | 284.48 |
| Comparative Example 3 | 61 | 3.62 | 0.35 | 0.14 | 0.080 | 0.007 | 0.001 | 0.009 | 284.51 |
| Comparative Example 4 | 69 | 1.38 | 0.53 | 0.22 | 0.184 | 0.001 | 0.034 | 0.003 | 284.38 |
| Comparative Example 5 | 68 | 1.45 | 0.48 | 0.21 | 0.160 | 0.002 | 0.031 | 0.005 | 284.40 |

Meanwhile, in FIG. 4, in addition to the Raman spectrum of the carbon layer of the negative electrode active material in Example 1, the Raman spectra of carbon layers of the negative electrode active materials in Comparative Example 1 (broken line) and Comparative Example 4 (faint solid line) are shown. In FIG. 6, in addition to an OCP curve in Example 1, OCP curves in Comparative Examples 1 and 4 are shown.

In addition, the peak intensities (the count values, the normalized values, and the average values of the normalized values) of the main positive secondary ions in the TOF-SIMS spectra in each of the negative electrode active materials in Comparative Examples 1 and 2 are shown in Tables 4 and 5 below. Moreover, in FIG. 7, in addition to Example 1, the peak intensities of the main positive secondary ions in the TOF-SIMS spectra on the surfaces of the negative electrode active materials in Comparative Examples 1 and 4 are compared in FIG. 7.

**[Table 4]**

| *m*/*z* | | Formula | Intensity (count) | | Normalized Value | | | |
|---|---|---|---|---|---|---|---|---|
| | | | First Time | Second Time | First Time | Second Time | | Average Value |
| 22.99 | | Na⁺ | 68311 | 79707 | 2.17×10¹ | 3.11×10¹ | | **2.64×10¹** |
| 27.97 | | Si⁺ | 3144 | 2564 | 1.00 | 1.00 | | **1.00** |
| 44.98 | | SiOH⁺ | 2172 | 1968 | 6.91×10⁻¹ | 7.67×10⁻¹ | | **7.29×10⁻¹** |
| 55.06 | | C₄H₇⁺ | 39071 | 47229 | 1.24×10¹ | 1.84×10¹ | | **1.54×10¹** |
| 91.05 | | C₇H₇⁺ | 5076 | 6082 | 1.61 | 2.37 | | **1.99** |
| 149.03 | | C₈H₅O₃⁺ | 463 | 491 | 1.47×10⁻¹ | 1.92×10⁻¹ | | **1.69×10⁻¹** |
| 155.15 | | C₉H₁₉N₂⁺ | 294 | 308 | 9.35×10⁻² | 1.20×10⁻¹ | | **1.07**×**10⁻¹** |
| 208.98 | | Bi⁺ | 359 | 437 | 1.14×10⁻¹ | 1.70×10⁻¹ | | **1.42**×**10⁻¹** |
| 219.18 | | C₁₅H₂₃O⁺ | 234 | 277 | 7.44×10⁻² | 1.08×10⁻¹ | | **9.12**×**10⁻²** |
| 282.30 | | C₁₈H₃₆NO⁺ | 624 | 538 | 1.99×10⁻¹ | 2.10×10⁻¹ | | **2.04**×**10⁻¹** |
| 284.31 | | C₁₈H₃₈NO⁺ | 860 | 779 | 2.74×10⁻¹ | 3.04×10⁻¹ | | **2.89**×**10⁻¹** |
| 288.30 | | C₁₇H₃₈NO₂⁺ | 163 | 185 | 5.19×10⁻² | 7.22×10⁻² | | **6.20**×**10⁻²** |
| 304.27 | | C₂₁H₃₈N⁺ | 896 | 1265 | 2.85×10⁻¹ | 4.93×10⁻¹ | | **3.89**×**10⁻¹** |
| 338.35 | | C₂₂H₄₄NO⁺ | 14 | 9 | 4.45×10⁻³ | 3.51×10⁻³ | | **3.98**×**10⁻³** |
| 369.32 | | C₂₄H₄₉O₂⁺ | 18 | 11 | 5.73×10⁻³ | 4.29×10⁻³ | | **5.01**×**10⁻³** |
| 530.49 | | C₃₅H₆₂O₃⁺ | 32 | 38 | 1.02×10⁻² | 1.48×10⁻² | | **1.25**×**10⁻²** |
| 549.53 | | C₃₅H₆₅O₄⁺ | 32 | 23 | 1.02×10⁻² | 8.97×10⁻³ | | **9.57×1**0⁻³ |
| 663.54 | | C₄₂H₆₄PO₄⁺ | 17 | 13 | 5.41×10⁻³ | 5.07×10⁻³ | | **5.24**×**10⁻³** |
| | | Total Secondary Ion Intensity | 681622 | 794449 | | | | |

**[Table 5]**

| m/z | | Formula | Intensity (count) | | Normalized Value | | | |
|---|---|---|---|---|---|---|---|---|
| | | | First Time | Second Time | First Time | Second Time | | Average Value |
| 22.99 | | Na⁺ | 3619 | 2498 | 2.23 | 1.25 | | **1.74** |
| 27.97 | | Si⁺ | 1625 | 1995 | 1.00 | 1.00 | | **1.00** |
| 44.98 | | SiOH⁺ | 1092 | 982 | 6.72×10⁻¹ | 4.92×10⁻¹ | | **5.82×10⁻¹** |
| 55.06 | | C₄H₇⁺ | 33379 | 25037 | 2.05×10¹ | 1.26×10¹ | | **1.65×10¹** |
| 91.05 | | C₇H₇⁺ | 3694 | 2808 | 2.27 | 1.41 | | **1.84** |
| 149.03 | | C₈H₅O₃⁺ | 507 | 257 | 3.12×10⁻¹ | 1.29×10⁻¹ | | **2.20×10⁻¹** |
| 155.15 | | C₉H₁₉N₂⁺ | 475 | 223 | 2.92×10⁻¹ | 1.12×10⁻¹ | | **2.02×10⁻¹** |
| 208.98 | | Bi⁺ | 175 | 170 | 1.08×10⁻¹ | 8.52×10⁻² | | **9.65×10⁻²** |
| 219.18 | | C₁₅H₂₃O⁺ | 341 | 316 | 2.10×10⁻¹ | 1.58×10⁻¹ | | **1.84×10⁻¹** |
| 282.30 | | C₁₈H₃₆NO⁺ | 1472 | 1628 | 9.06×10⁻¹ | 8.16×10⁻¹ | | **8.61×10⁻¹** |
| 284.31 | | C₁₈H₃₈NO⁺ | 1511 | 1850 | 9.30×10⁻¹ | 9.27×10⁻¹ | | **9.28×10⁻¹** |
| 288.30 | | C₁₇H₃₈NO₂⁺ | 711 | 667 | 4.38×10⁻¹ | 3.34E-01 | | **3.86×10⁻¹** |
| 304.27 | | C₂₁H₃₈N⁺ | 99 | 91 | 6.09×10⁻² | 4.56×10⁻² | | **5.33×10⁻²** |
| 338.35 | | C₂₂H₄₄NO⁺ | 83 | 51 | 5.11×10⁻² | 2.56×10⁻² | | **3.83×10⁻²** |
| 369.32 | | C₂₄H₄₉O₂⁺ | 1 | 4 | 6.15×10⁻⁴ | 2.01×10⁻³ | | **1.31×10⁻³** |
| 530.49 | | C₃₅H₆₂O₃⁺ | 59 | 64 | 3.63×10⁻² | 3.21×10⁻² | | **3.42×10⁻²** |
| 549.53 | | C₃₅H₆₅O₄⁺ | 6 | 5 | 3.69×10⁻³ | 2.51×10⁻³ | | **3.10×10⁻³** |
| 663.54 | | C₄₂H₈₄PO₄⁺ | 21 | 55 | 1.29×10⁻² | 2.76×10⁻² | | **2.02×10⁻²** |
| | | Total Secondary Ion Intensity | 498859 | 403639 | | | | |

Meanwhile, each of the XPS spectra of the negative electrode active materials in Example 5 and Comparative Example 1, in addition to Example 1, is shown in FIG. 8.

As is apparent from Tables 2 and 3, the negative electrode active materials in Examples 1 to 8, having the peak position attributed to the G band in the range of more than 1590 cm⁻¹ and 1597 cm⁻¹ or less in the Raman spectrum of the carbon layer, were able to exhibit better cycle characteristics than that of Comparative Examples 1 to 5 having the peak positions attributed to G band being 1590 cm⁻¹ or less. This result is considered to be that by virtue of the peak position attributed to the above G band being in a range of more than 1590 cm⁻¹ and 1597 cm⁻¹ or less, the number of graphene layers in the carbon layer was few and the edges of the multi-layer graphene, which generated the side reaction with the electrolyte liquid, were few, thereby suppressing the generation of the SEI film.

From the comparison among the results of Examples 1 to 5, it is found that the peak position of the G band in the Raman spectrum shifted to a high wavenumber side as the CVD temperature was lowered. Moreover, the shift of the peak position of the G band in the Raman spectrum to the high wavenumber side indicates that the number of graphene layers in the carbon layer is few. Therefore, it is considered that, in this case, the edges of the multi-layer graphene, which generated side reaction with the electrolyte liquid, were few, and thus the formation of the SEI film was able to be suppressed.

Furthermore, as is apparent from Tables 2 and 3, as the CVD temperature was lower, the crystallite size obtained from the peaks attributed to the Si (111) crystal plane also tended to be smaller. It is considered that the smaller this crystallite size was, the smaller an existence proportion of crystallized Si in the composition was; thus, the side reaction with the electrolyte liquid was able to be suppressed.

Meanwhile, as is apparent from Tables 2 and 3 clearly show, as the CVD temperature was lower, the average potential of the test electrode, in which a state of charge of the test battery was in a range of 10% or more and 20% or less, tended to be higher. This is considered when the average potential was high, the proportion of the SiO component, which was disproportionated to Si and SiO₂ in the silicon oxide particles, was reduced, and thus, Li was easily inserted. Consequently, it is considered that the battery characteristics were improved due to the increased diffusibility in the SiO bulk. As a result, it was confirmed that the cycle capacity retention ratio was improved.

On the other hand, in Example 2, a long-time CVD treatment was required; therefore, an optimal range is present for industrial production.

Meanwhile, it is considered that the resistance of the electrode was increased due to the increase in the proportion of diamondlike structure in the carbon layer at the CVD in Example 4. As a result, it was confirmed that the characteristics in Example 4 were degraded compared with Examples 1 to 3.

In Example 5, it is considered that, as a result of setting the CVD temperature at 790°C, the peak position of the G band in the Raman spectrum shifted to a low wavenumber side, and when compared with Examples 1 to 3, the number of graphene layers in the carbon layer was larger, thus the side reaction with the electrolyte liquid was prone to generate.

In addition, it was confirmed that although the crystallite size was rapidly enlarging in Example 5, by virtue of the peak position attributed to the G band being in a range of more than 1590 cm⁻¹ and 1597 cm⁻¹ or less in the Raman spectrum of the carbon layer, better cycle characteristics than Comparative Examples 1 to 5 was able to be obtained.

In Example 6, it was confirmed that the decrease in the median diameter increased the surface area per mass, thereby increasing the battery's irreversible capacity. In Example 7, it was confirmed that, by having a median diameter of 15 um or more, the particle became liable to break, and thus the new surface was prone to be generated. Also, in Example 8, it was confirmed that due to the large proportion of particles having a particle size of 1 um or less in the negative active material particles, the side reaction with the electrolyte liquid was increased by the increase in the surface area per mass. As a result, it was confirmed that the negative electrode active materials in Examples 6 to 8 exhibited degraded cycle characteristics compared with Example 1.

In Comparative Examples 1 to 5, as a result of setting the CVD temperatures at 790°C or higher, the peak positions attributed to the G band shifted to the low wavenumber side compared with Examples 1 to 8 (FIG. 4), the crystallite sizes obtained from the peaks attributed to the Si (111) crystal plane became larger (Table 3), and the average potentials of the test electrodes, in which a state of charge of the test batteries was in a range of 10% or more and 20% or less, were lowered (FIG. 6). It was confirmed that the cycle characteristics were degraded due to these results.

Meanwhile, as is apparent from FIG. 7, and Tables 4 and 5 described above, in the TOF-SIMS spectrum of the carbon layer of the negative electrode active material in Example 1, the intensities (normalized intensity) of the peaks attributed to C₈H₅O₃, C₁₅H₂₃O, C₂₄H₄₉O₂, C₃₅H₆₂O₃, and C₃₅H₆₅O₄, being the positive secondary ions, based on the peak attributed to Si were higher than the normalized intensities of these peaks in the TOF-SIMS spectra in Comparative Examples 1 and 4. As a result, it is considered that the contact between the multi-layer graphene edges and the electrolyte liquid was successfully decreased, and thus the side reaction with the electrolyte liquid was more successfully suppressed in the negative electrode active material in Example 1 than the negative electrode active materials in Comparative Examples 1 and 4.

Furthermore, as is apparent form FIG. 8, as the CVD temperature became higher, the peak position of C1s shifted to the high binding energy side. Although not shown, as the CVD temperature became higher, the peak intensity of O1s became larger. Also from this result, it can be determined that the graphene edge portion in the carbon layer was larger in the negative electrode active material in Comparative Example 1 than in Examples 1 and 5. As a result, it is considered that the contact between the multi-layer graphene edges and the electrolyte liquid on the surface of the formed carbon layer was unable to be alleviated in Comparative Example 1, thereby generating the side reaction with the electrolyte liquid.

In addition, in Comparative Example 3, it was confirmed that due to the high proportion of particles having a particle size of 1 um or less in the negative active material particles, the side reaction with the electrolyte liquid was increased by the increase in the surface area per mass, resulting in further degradation of the cycle characteristics

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode active material containing negative electrode active material particles,
wherein the negative electrode active material particles contain silicon oxide particles coated with a carbon layer, and
the carbon layer has a peak position attributed to a G band in a range of more than 1590 cm⁻¹ and 1597 cm⁻¹ or less in a Raman spectrum obtained from Raman spectrometry for at least a part of the carbon layer.

2. The negative electrode active material according to claim 1,
wherein the negative electrode active material particles have a crystallite size of 1.5 nm or less, the crystallite size being obtained by Scherrer analysis of a peak attributed to a Si (111) crystal plane in an X-ray diffraction spectrum, which is obtained by X-ray diffraction using Cu-Kα rays and following wave separation.

3. The negative electrode active material according to claim 1 or 2,
wherein in an open circuit potential curve obtained by open circuit voltage measurement of a test battery comprising: a test electrode containing the negative electrode active material; and lithium metal as a counter electrode, an average potential of the test electrode, in which a state of charge of the test battery is in a range of 10% or more and 20% or less, is 0.4 V or more vs. Li/Li⁺.

4. The negative electrode active material according to any one of claims 1 to 3,
wherein in a time-of-flight secondary ion mass spectra for at least a part of the carbon layer, an intensity of a peak attributed to CₓH_{y}O_{z} (where "x" is 8 or more and 42 or less, "y" is 5 or more and 65 or less, and "Z" 1 or more and 5 or less), being a positive secondary ion, is 0.1 or more based on an intensity of a peak attributed to Si.

5. The negative electrode active material according to any one of claims 1 to 4,
wherein the negative electrode active material particles have a peak position of C1s being 284.3 eV or less in an X-ray photoelectron spectrum obtained by X-ray photoelectron spectroscopy.

6. The negative electrode active material according to any one of claims 1 to 5,
wherein the negative electrode active material particles have a median diameter of 4.5 um or more and 15 um or less.

7. The negative electrode active material according to any one of claims 1 to 6,
wherein a proportion of particles having a particle size of 1 um or less in the negative electrode active material particles is 2.5% or less on a volume basis.

8. A mixed negative electrode active material comprising:
the negative electrode active material according to any one of claims 1 to 7; and
a carbon-based active material.

9. A method for producing a negative electrode active material containing negative electrode active material particles containing silicon oxide particles coated with a carbon layer, the method comprising the steps of:
producing silicon oxide particles;
coating the silicon oxide particles with a carbon layer by pyrolytic chemical vapor deposition using hydrocarbon gas at a temperature of 790°C or less to produce negative electrode active material particles;
selecting, from the produced negative electrode active material particles, negative electrode active material particles containing the carbon layer in which the carbon layer, in a Raman spectrum obtained from Raman spectrometry for at least a part of the carbon layer, has a peak position attributed to a G band in a range of more than 1590 cm⁻¹ and 1597 cm⁻¹ or less; and
producing a negative electrode active material by using the selected negative electrode active material particles.
